Europäisches Patentamt

European Patent Office

Office européen des brevets

(19)

(11) Publication number: **0 266 328**
**A1**

## (12) EUROPEAN PATENT APPLICATION

(21) Application number: 87850315.0

(22) Date of filing: 21.10.87

(51) Int. Cl.⁴: **B 60 D 1/00**

(30) Priority: 21.10.86 SE 8604476

(43) Date of publication of application:
04.05.88 Bulletin 88/18

(84) Designated Contracting States:
BE DE FR GB NL SE

(71) Applicant: VBG Produkter AB
Box 1216
S-462 01 Vänersborg (SE)

(72) Inventor: Lefverman, Evan
Pollaregatan 49
S-462 00 Vänersborg (SE)

(74) Representative: Delhage, Einar
Bergenstrahle & Lindvall AB Sankt Paulsgatan 1
S-116 47 Stockholm (SE)

(54) An arrangement at a drawbar.

(57) The invention relates to a drawbar with a drawbar eye (32) for pivotable connection of a trailer to a truck. The drawbar includes two mutually telescopically slidably supported tubes (18,20), of which one (18) at its one end has connection to an attachment (38) located on the trailer side, and the other one (30) at the opposite end carries the drawbar eye (32). A double acting hydraulic cylinder device (34,36) is arranged within the tubes and pivotally connected to said ends and acting therebetween.

An angle sensing device (44) is arranged in association with the fore end of the drawbar for sensing the angle between the drawbar and the truck and controlling the hydraulic fluid supply to the hydraulic cylinder (34) in response to the sensed angle, in order to change the length of the drawbar.

Fig. 3

## Description

An arrangement at a drawbar.

The present invention relates to an arrangement at a length variable drawbar with a drawbar eye for pivotable connection of a trailer to a truck.

Law regulations limit the length of transport vehicle trains travelling on public roads. The maximum length allowed in Sweden is thus e.g. 24 m, whereas on the European continent it is 18 m. A natural aspiration has been to design the components of the train so that the train within the given maximum length can accommodate the greatest possible cargo volume. This has i.a. resulted in attempts to decrease the distance between truck and trailer. This solution is, however, limited by the fact that a sufficient distance must be maintained between the two vehicles in order to allow for pivoting manoeuvres, both moderate ones at normal conveyance on streets and public roads, as well as sharp manoeuvres within terminal areas and the like, without the vehicles contacting each other with attendant risk for damages.

Attempts have been made to solve the above-mentioned problem by making the drawbar between the truck and trailer vehicles length variable. In practice it is, however, hard to attain a length variable drawbar design that combines a sufficient strength even in an extended position of the drawbar with the requirement that the length variation shall be able to be carried through quickly, e.g. by remote control from the cabin of the truck or automatically, when the angle between truck and trailer is changed.

One object of the invention has been to provide a length variable drawbar design that combines a sufficient strength against loads and stresses occurring in practice with a simple and easily manoeuvrable and controllable length variation arrangement, as well as a further design that is particularly adapted to and can carry a device for sensing the angle between truck and trailer and controlling the length variation in response to the change of this angle.

For attaining this object the drawbar in the arrangement according to the invention comprises at least two mutually telescopically slidably supported tubes, a first one of which at one end thereof being connected to an attachment located on the trailer side, and a second one at the opposite end carrying the drawbar eye, a double acting hydraulic cylinder device being arranged within the tubes and pivotally connected to and acting between said ends.

The design comprising mutually telescopically slidably supported tubes can, inherently, without difficulties be dimensioned to carry loads and stresses appearing in practice, at the same time as an enclosure for the hydraulic cylinder device is obtained, which protects it against penetration of dirt and makes possible a suspension of the hydraulic cylinder device that, to the greatest possible extent, relieves the same against sidewardly directed stresses. The first tube furthermore forms a natural attachment for an angle sensing device for sensing the angle between drawbar and truck, by means of which the hydraulic fluid flow to the hydraulic cylinder can be controlled in response to the sensed angle for changing the length of the drawbar.

According to a particularly advantageous embodiment the angle sensing device is attached on the first tube for sensing the tendency to a change of the distance between the fore end of the first tube and a sensing surface on the back of the truck, appearing at a change of the angle between the drawbar and the truck.

Further advantageous embodiments of the arrangement according to the invention are stated in the claims and appear from the description given below with reference to the drawings, on which a number of embodiments are schematically illustrated, and on which,

Figure 1 in sideview illustrates a vehicle train, with which the invention is used,

Figure 2 in plan view shows a portion around the drawbar at the vehicle train according to Figure 1, when truck and trailer are angled with respect to each other,

Figure 3 shows a longitudinal section in sideview through a drawbar which is mounted on a dolly included in the vehicle train according to Figure 1, the drawbar being then illustrated in its most retracted position,

Figure 4 shows a front view of the drawbar according to Figure 3,

Figure 5 in a similar section as in Figure 3 shows the drawbar according to this Figure in its most extended condition,

Figure 6 in a similar section as in Figure 3 shows a modification of the drawbar according to this Figure.

Figures 7a-c show a first embodiment of an angle sensing device for sensing the angle between drawbar and truck, and illustrates the operation of this device,

Figure 8 illustrates a further embodiment of an angle sensing device for the angle between drawbar and truck,

Figure 9 illustrates a modification of the device according to Figure 8,

Figure 10 shows a view in the direction of arrows X-X in Figure 9,

Figure 11 shows an angle sensor in the form of a combination of the embodiments of Figures 7 and 8,

Figures 12-14 illustrate a further embodiment of an angle sensing device for the angle between drawbar and truck, the respective Figures showing the drawbar in three different angle positions with respect to the truck,

Figures 15 and 16 schematically illustrate a further embodiment of the angle sensing device for the angle between drawbar and the truck, the two Figures showing two different angle positions of the drawbar,

Figure 17 shows a basic diagram of an electric control circuit used in connection with the embodiment according to Figures 15 and 16 for a directional valve included in the hydraulic circuit for the extension of the drawbar,

Figure 18 schematically shows a perforated disc included in the angle sensing device at the embodiment according to Figures 15-17,

Figure 19 schematically provides an example of the design of a circuit according to Figure 17.

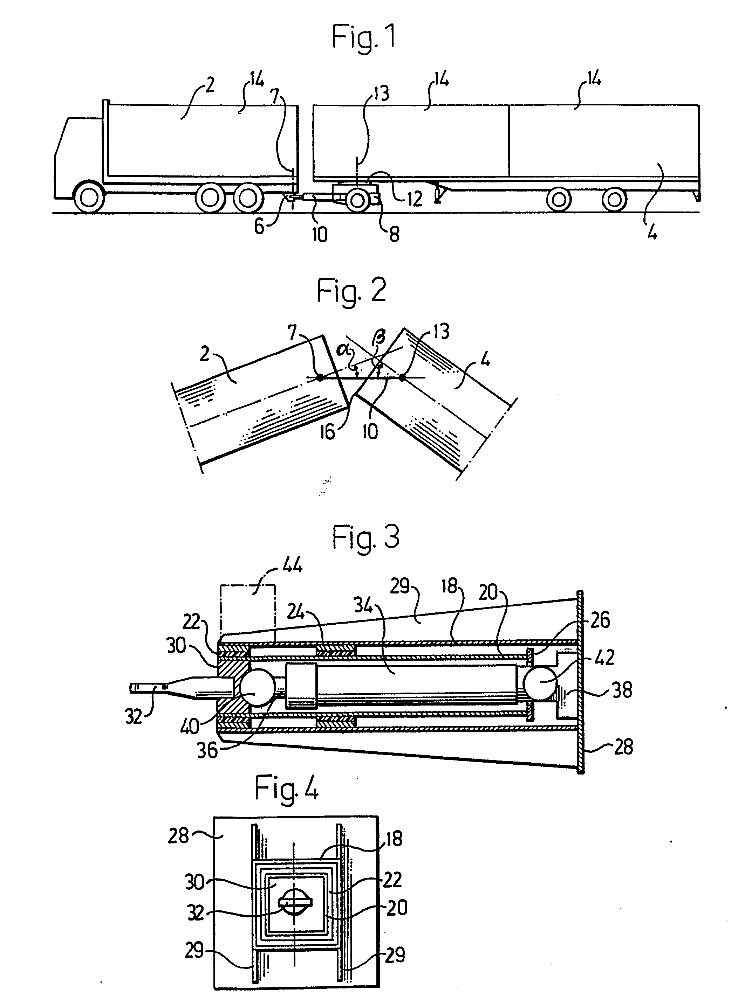

Figure 1 shows a load vehicle train including a truck on 2 and a trailer 4. By means of a conventional trailer coupling 6 with a first pivot 7, a dolly 8 is coupled to the truck 2 by means of a drawbar 10. The dolly 8 carries a semi-trailer coupling 12, (fifth wheel), on which the fore end of the trailer 4, designed as a semitrailer is pivotally supported around a second pivot 13. In the example shown the truck and the semitrailer are supposed to load one and two standard containers 14, respectively.

Figure 2 illustrates the situation when the vehicle train is pivoting. As illustrated the drawbar 10 forms an angle α with the longitudinal direction of the truck 2 and an angle β with the longitudinal direction of the semitrailer. It is realized that in this mutual position of the truck and semitrailer the drawbar mst have a length sufficient to prevent the corner designated 16 of the semitrailer to abut the rear end of the truck with an attendant risk for damages. From the staightened position of the vehicle train shown in Figure 1 an extension of the drawbar 10 is therefore required in order to reach and allow the situation illustrated in Figure 2.

With reference to Figures 3 - 5 the drawbar 10 includes two mutually telescopically slidably supported square tubes 18 and 20, respectively. More particularly the tube 20 is telescopically slidably supported in the tube 18 by means of two sets of teflon plates 22 and 24, respectively, extending around the circumference of the tubes in the space therebetween. The distance between the rear edge of the rear teflon plate 24 and a stop collar 26 located at the rear end of the tube 20 has been chosen to be the same as the desired maximum extending length of the tube 20. At its rear end the tube 18 is fixedly connected to an attachment plate 28, by means of which the drawbar, in a way not shown, is bolted to a corresponding vertical attachment plate on the dolly. Two stiffener plates 29 are attached at each one of the sides of the tube 18 and at the attachment plate 28.

In a plate 30 attached into the fore end of the tube 20 and closing the tube a drawbar eye 32 is attached. The drawbar eye 32 is intended for cooperation in a conventional way with a coupling bolt, now shown, included in the trailer coupling 6. Centrally within the two tubes 18 and 20 a double acting hydraulic cylinder device with a cylinder portion 34 and a piston rod portion 36 extends. In close connection to the fore end of the tube 20 the piston rod 26 is pivotally connected to the plate 30 and in close connection to the rear end of the tube 18 the cylinder 34 is pivotally connected to an attachment 38 attached to the plate 28. The pivots have been indicated at 40 and 42, respectively, but for the sake of clearness their closer design is not shown. However, the man of the art realizes that they can comprise conventional pivot construction e.g. with a horizontal pivot or a ball joint.

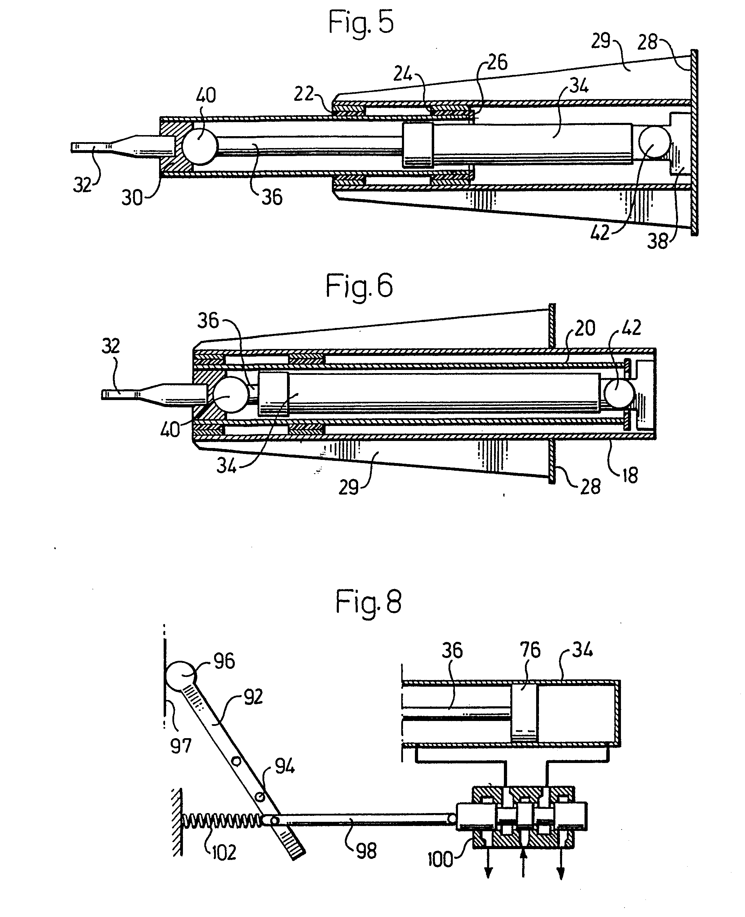

Figure 5 illustrates the mutual position of the tubes 18 and 20 at maximum extension of the tube 20 by means of the hydraulic cylinder device 34, 36. As stated above this position is determined by the mutual position of the rear teflon plates 24 and the stop collar 26. By means of the design shown a protecting enclosure is obtained for the hydraulic cylinder 34, 36, which, due to the plate 30 and the teflon plates 22 extending around the circumference of the tubes, effectively prevents penetration of dirty particles. Furthermore, the hydraulic cylinder device is relieved with respect to sidewardly acting stresses by its pivotable suspension inside the tubes and by means of the protection afforded by the tubes. Even if piston rod breakage should occur due to extreme loads the two tubes cannot be separated from each other due to the fact that the abutment of the collar 26 against the teflon plates 24 prevents it.

In Figure 6 a modification of the drawbar according to Figures 3 - 5 is shown, the same or similarly acting details as in these Figures being provided with the same numerals. While maintaining the minimum length of the drawbar protruding from the dolly, the design according to Figures 3 - 5 can be modified so that a further extension of the drawbar is rendered possible. As shown in Figure 6 this is obtained by lengthening the tubes 18 and 20 beyond the attachment 28 so as to make possible the introduction of hydraulic cylinder device 34, 36 with a greater length, by a corresponding shift of the rear attacment point thereof, as indicated in Figure 6. A condition is that the dolly has a corresponding space, or tunnel, that can receive the rearwardly extending portion.

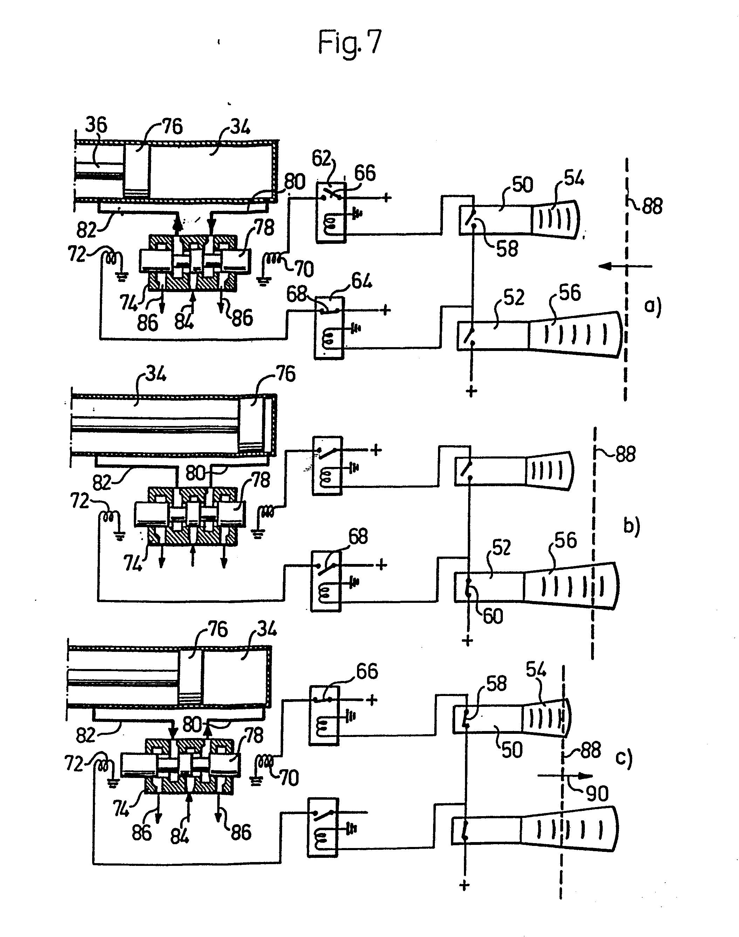

On its fore end between the plates 29 and the tube 28 carries an angle sensing device indicated with dashed lines at 44 (only shown in Figure 3) and intended to sense the angle between drawbar and truck and in response to the sensed angle control the hydraulic fluid feed to the hydraulic cylinder 34 for changing the length of the drawbar so as, as has been discussed above, on the one hand, avoid damages due to the truck 2 and the trailer 4 coming too close to each other at angleing of the train, and on the other hand keep the least possible distance between the truck and the trailer when the train is straightened out. In Figures 7 - 19 different embodiments of such an angle sensing device and its operation are schematically illustrated.

It is common to the embodiments according to Figures 7 - 10 that the tendency appearing at change of angle between the drawbar 10 and the truck 2, to change of distance between the fore end of the tube 18 and a sensed device on the back of the truck, is sensed. More particularly, under the presumption of unchanged length of the drawbar it is realized that, due to the pivotable connection of the drawbar with the truck at the pivot 7, an arbitrary point on the tube 18, e.g. at its fore end, at pivoting of the drawbar around the pivot 7 will follow a circular arc with the pivot 7 as its centre. Furthermore it is realized that this circular arc has its greatest distance from the truck when the train is in a straightened condition and that the distance decreases with the increase of the angle between the drawbar and the truck.

The dimensioning of a desired possibility of lengthening of the drawbar is determined i.a. by the configuration of the train in question. The risk of contact between truck and trailer depends e.g., of course, also on the angle β at the embodiment shown in Figures 1 and 2. It is, however, possible to determine the range of lengthening of the drawbar provided there is a certain allowed maximum angle of the drawbar with respect to the truck, e.g. ± 30 %, and of the trailer with respect to the truck, e.g. ± 90°. This is under the condition that the train stands in one plane.

The embodiment of the angle sensing device 44 illustrated in Figures 7a-c comprises two inductive sensors 50 and 52, respectively, arranged above each other and directed against a plate on the back end of the truck. The sensor 52 has a greater range than the sensor 50, as indicated at 54 and 56, respectively. The sensors 50 and 52 are shown schematically with series connected contacts 58 and 60, respectively, which are closed when said sensed plate on the truck comes within reach of the respective sensor.

The sensors 51, 52 furthermore operate each a relay 62 and 64, respectively, having relay contacts 66 and 68, respectively, which are closed and openened, respectively, in the operated condition of the relay. The coils of the relays 62 and 64 are connected in parallel to a plus pole of the truck battery, via sensor contacts 58 and 60, respectively.

The relay contacts 66 and 68 lie in an input line from the plus pole of the car battery to each a solenoid 70 and 72, respectively, of a solenoid controlled direction slide valve 74 for the hydraulic cylinder device 34, 36. The direction valve 74 is set to be centered to its neutral position. The piston of the hydraulic cylinder 34 is designated with 76

The direction valve 74 is shown with its slide 78, connections 80 and 82 to each side of the piston 76, a pump input line at 84, and reservoir connections at 86.

In Figures 7a-c the sensed plate mounted on the rear end of the truck is indicated at 88 in three different positions. The condition for the position in Figure 7a is that the drawbar has been extended to its full length and that the train has been completely straightened out whereby the plate 88 has come in a position beyond the reach for both sensors 50 and 52. This will have the result that the contact 68 of the relay 64, which is closed in its rest position, closes the circuit to the solenoid 72. Thereby the slide 78 of the direction valve 74 is driven to the position shown, in which the cylinder space in front of the piston 76 via 82 is put into connection with the pump line 84 and the cylinder space behind the piston 76 via 80 is connected to the reservoir 86. By suitable dimensioning of the components complete insertion of the piston 76 in the cylinder 34 with retraction of the drawbar tube 20 to the position shown in Figure 3, and the sensed plate 88 drawn within the reach 56 of the sensor 52, is thereby obtained. When the sensor 52 senses the plate 88 the contact 60 is closed which results in opening of the contact 68 so that the solenoid 72 becomes currentless and the direction valve slide 78 is centered to its neutral position blocking the lines 80 and 82. This condition is shown in Figure 7b.

If the drawbar now starts to angle with respect to the truck the sensed plate 88 comes closer to the sensor 50 until it reaches within the reach 54 thereof. This situation is shown in Figure 7c. The contact 58 as well as the relay contact 66 are closed and the solenoid 70 obtains current. Thereby the slide 78 of the direction valve 74 is brought to the position in Figure 7c, where the chamber located behind the piston 76 is connected to the pressure line 84 via 80 and the chamber located before the piston 76 is connected to the reservoir line 86 via the line 82. The result will be that the piston is shifted outwardly so that the drawbar is lengthened, appearing as a removal of the sensing plate 88, which is indicated by the arrow 90. When the plate 88 leaves the reach 54 of the sensor 50 the contacts 58 and 66 are are opened again and the direction valve slide 78 returns to its neutral position blocking both chambers of the cylinder 34. This implies that the drawbar is maintained in its extended position under the condition that its angle with respect to the truck is not further increased so that the plate 88 once again gets within the reach 54 of the sensor 50. Should this happen the piston 76 is shifted further outwardly until the plate 88 once again leaves the reach 54 of the sensor 50 and the piston 76 is set to a new position corresponding to a further lengthening of the drawbar. If the vehicle train is straightened out completely the situation shown in Figure 7a will be the result again.

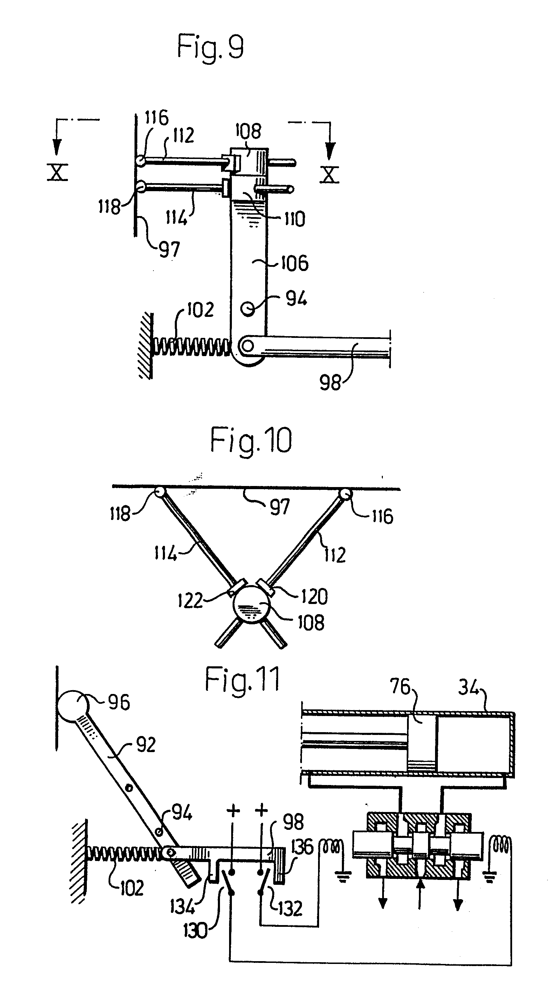

In the embodiment shown schematically in Figure 8 a sliding stick 92 is used instead of the inductive sensors, said stick being pivotally connected with the tube 18 about a horizontal pivot 94 in a way not shown in detail. At its upper end the stick 92 comprises a ball shaped head 96 intended for sliding cooperation with a sensed surface 97 on the rear end of the truck. A control rod 98 at its one end is pivotally connected with the stick 92 below the pivot 94 and its other end with the slide of a neutral position centered direction valve 100 which for the sake of simplicity is shown as having the same form as in Figures 7a-c and with the same commections to the hydraulic cylinder device 34, 36. The slide of the direction valve 100 is, however, not solenoid controlled. By means of a pressure spring indicated at 102 the rod 92 is biased counter clockwise around the pivot 94.

Figure 8 shows a position in which the stick 92 by means of its ball head is kept biased into abutment against the surface 97 on the traction vehicle. The drawbar is partially inserted and its angle with respect to the truck momentarily constant, the direction valve being in its neutral position. If the angle is now increased further this results in the surface 97 approaching the stick 92 which is pressed clockwise around the pivot 94 against the force of the spring 102. Thereby the valve slide is drawn to the left via the rod 98, resulting in the same situation as is shown to the left in Figure 7c, i.e. the drawbar is lengthened due to the fact that pressure behind the piston 76 increases. If the change of the drawbar angle ceases when the drawbar has been lengthened as required, the force exercised on the stick 92 by the surface 97 also ends, this causing the direction valve slide to return to its neutral position shown in Figure 8 and thereby keeping the piston 76 and the drawbar in the new position.

If the train is straightened out from this situation the contact between the ball 96 and the sensed surface 97 will cease and the slide of the direction valve 100 is shifted to the right by the rod 98 due to the spring 102. Thereby the same situation is obtained as is shown to the left in Figure 7a. The slide gets into its neutral position when the piston 76 has reached its inner end position in the cylinder 34 and the drawbar is in its most retracted position.

Figure 9 shows a modification of the embodiment of Figure 8, the direction valve and the hydraulic cylinder being the same but have been omitted. Details in Figure 9 having the same function as in Figure 8 have obtained the same reference numerals as in the latter Figure. The stick 92 has here been replaced by a stick 106 carrying at the top two segments 108 and 110, respectively, which are pivotable around the central axis of the stick and each have a through hole. With a sensed surface 97 provided on the rear end of the truck two sensing rods 112 and 114, respectively, are pivotally connected at 116 and 118, respectively, in the way shown in Figure 10 on each side of a longitudinal mid plane of the truck. The rods 112 and 114 extend slidably through each one of the above-mentioned through holes in the rotatable segments 108 and 110, respectively. The rods 112 and 114 then comprise each a stop 120 and 122, respectively, for said sliding movement, said stops being so located that the slide of the direction valve is in its neutral position when the drawbar has reached the correct length with respect to the drawbar angle. Of course, the two rods 112 and 114 are arranged for each its direction of angleing of the drawbar with respect to the truck. The operation of the embodiment according to Figures 9 and 10 is the same as of that according to Figure 8, the direct cooperation between the surface 97 and ball 96, however, corresponding to a cooperation of the surface 97 with the stick 106 via the rods 112 and 114, respectively, and the stops 120, 122, respectively.

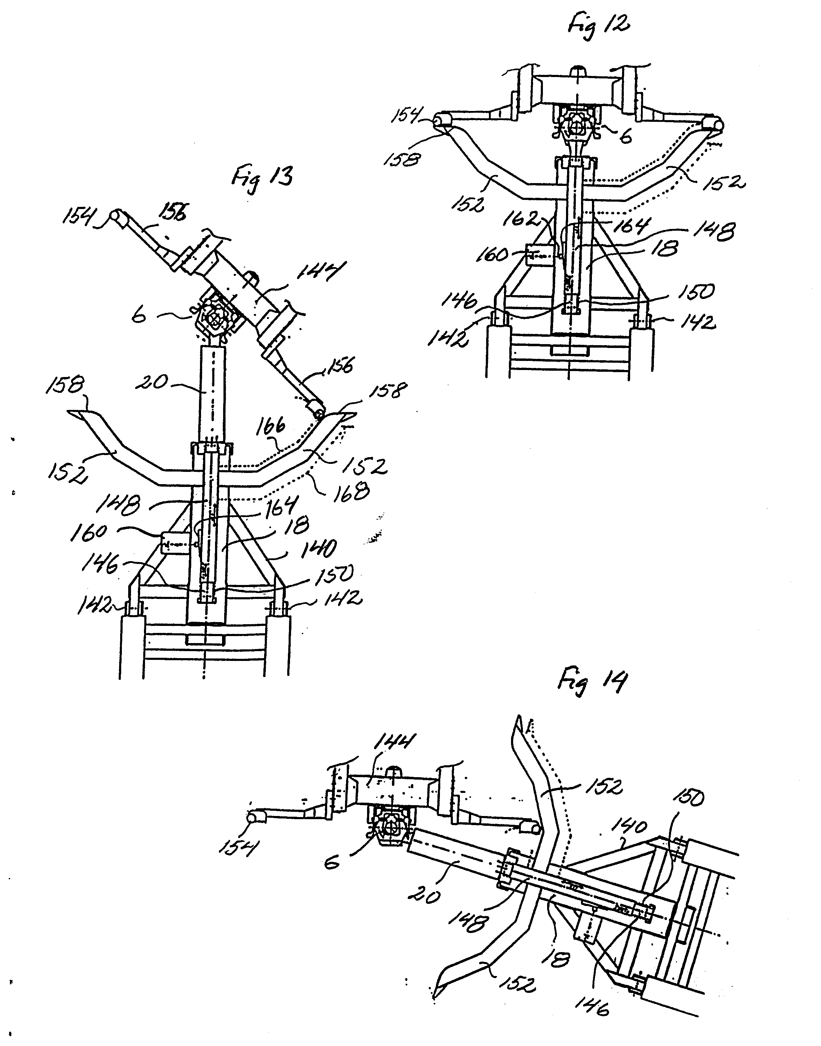

At a combination of the embodiments according to Figures 7 and 8, indicated schematically in Figure 11, the rod 92 is used instead of the inductive sensors 50, 52 for acting on two contacts 130, 132 in the same way as the contacts 66, 68 in Figure 7 are acted upon by the sensors 50, 52. More particularly, the two contacts are then operated by each its operating arm 134 and 136, respectively, on the rod 98. In Figure 11 the direction valve slide takes its neutral position due to the contacts 130, 132 being open.

In all the embodiments described with reference to Figures 7-11 the direction valve can be arranged on the drawbar tube 18 between the plates 29 in practice. If it is desirable to avoid drawing the relatively coarse hydraulic lines required for the direction valve on the drawbar, it is suitably positioned on the dolly in the embodiments according to Figures 7 and 11. In the embodiments according to Figures 8 and 9 a pilot valve can be used for controlling the direction valve. This pilot valve can then be positioned and controlled in essentially the same way as has been described above for the direction valve, the latter then being provided on the dolly.

In slightly different form than in Figures 3-6 one can recognize in the embodiment according to Figures 12-14 the outer tube 18 and the inner tube 20 of the drawbar. The outer tube 18 is fixedly mounted on a triangular framework 140 of a design essentially conventional at drawbars, which by means of horizontal pivots at 142 is connected to a trailer not shown with respect to its closer details. As earlier abover 6 is used to denote the trailer coupling which is mounted on a frame portion 144 of the traction car.

The outer tube 18 carries on its upper side, fixedly connected thereto, a guide 146 for a restrictedly movable slide 148. The slide 148 is spring biased forwardly on the guide 146 by means of a spring indicated at 150.

The slide 148 carries, fixedly connected thereto, two sidewardly - forwardly extending, arcuate sensing arms 152. The arms 152 with their fore ends are intended to cooperate with each a bearing surface 154 carried by a frame of the truck on a respective protruding arm 156 of the frame. More particularly the bearing surface 154 is in the form of a vertically extending and partly cylinder shaped surface. The end surfaces 158 of the arms 152 intended for cooperation with the bearing surfaces 154 extend with some extension essentially transversely to the longitudinal direction of the drawbar and pass into the arc of the corresponding arm 152 via a bevelled transition.

On the outer tube 18 a direction valve 160 is fixedly mounted which is included in the hydraulic circuit for the hydraulic cylinder 34 located within the inner tube 20 but not shown here. More particularly the slide, here not shown, of the direction valve is mechanically operable in the same way as in the embodiment according to Figure 8. More particularly, the direction valve slide here, however, senses a cam surface 164 mounted on the slide 148, by means of a cam follower indicated at 162 which is biased against the cam surface via the direction valve slide. The can and the cam follower 162 and 164, respectively, are so designed and arranged with respect to each other that when the cam follower takes a position essentially in the middle of the cam surface, the direction valve is in its neutral position, i.e. there is no hydraulic fluid feed to the cylinder 34.

The device described with reference to the Figures 13-14 operates in the following way.

In the Figures dashed lines 166 and 168, respectively, indicate the limits for the movement of the arms 152 with respect to the tube 18 in its length direction. In the position shown in Figure 12 the angle ($\alpha$, cf. Figure 2) between drawbar and truck is zero. The sensing surfaces 158 of the arms 152 abut the bearing surfaces 154 on the truck under the bias of the spring 150. The inner tube 20 is completely retracted in the outer tube 18. The cam follower 162 and thereby the direction valve 160 take a neutral position. When the angle increases beyond a certain minimum value towards one side, the arm 152 located on this side by means of its pressure against the corresponding bearing surface 154 and together with the slide 148 rigidly carrying the same, will be moved rearwardly with respect to the tube 18 against the bias of the spring 150. This implies that the cam follower 162 travels upwardly on the cam surface 164 and shifts the slide of the direction valve so that the valve opens for hydraulic fluid flow to the side of the piston in the hydraulic cylinder 34 remote from the piston rod 36. The inner tube 20 is thereby shifted outwardly out of the outer tube 18 until the pressure on the arm 152 in question exerted by the bearing surface 154 thereof, has decreased so much that the slide 148 under the action of the spring 150 has reached the neutral position again and the slide of the direction valve 160 takes its neutral position. The inner tube 20 is then maintained by the cylinder 34 here not shown, in the extended position until the angle between drawbar and truck further increases and the process is repeated to result in further extension of the drawbar.

When the drawbar is in an extended position and the angle between the same and the truck vehicle decreases, the slide 148 is shifted forwardly under the action of the spring 150, resulting in the cam follower 162 under the pressure of the direction valve slide travelling downwardly on the cam surface 164. The slide of the direction valve comes to a position in which hydraulic fluid is fed to the hydraulic cylinder 34 on the piston rod side of the piston 76. This leads to retraction of the inner tube 20 into the outer tube 18 until anew the neutral position of the slide 148, the cam follower 162 and thereby the slide of the direction valve 160 has been reached.

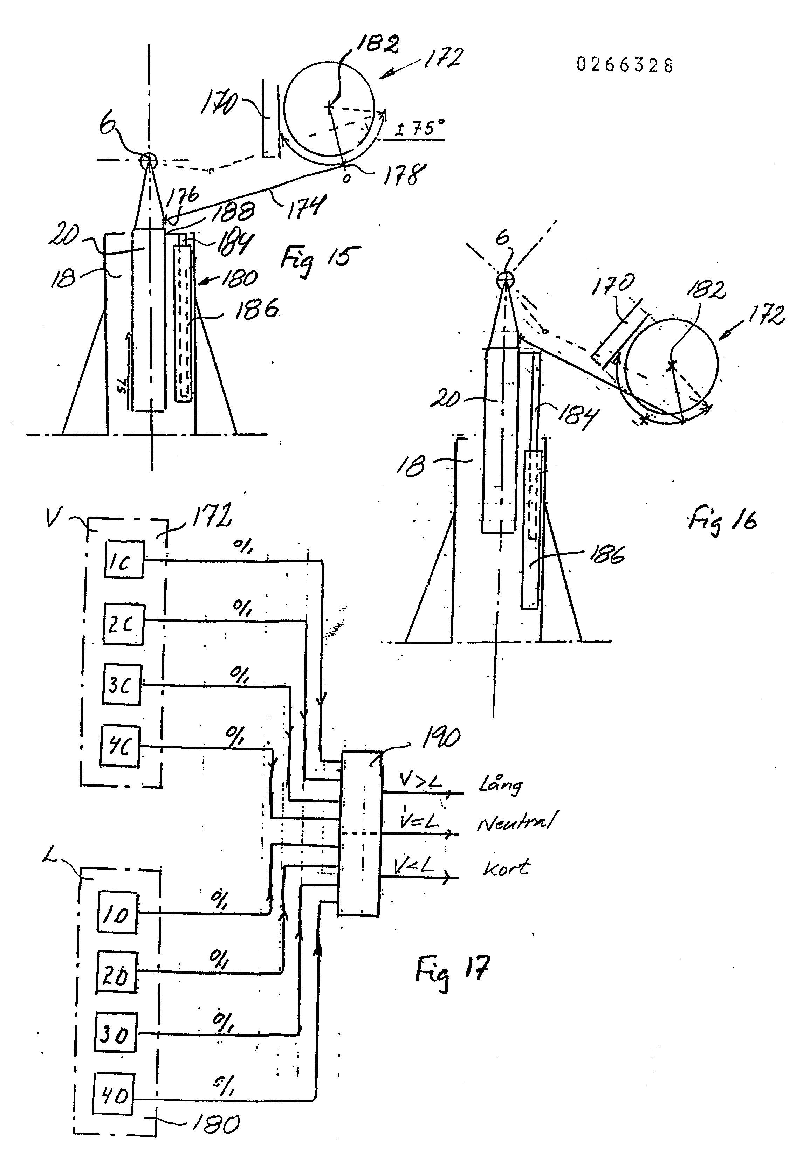

Figure 13 illustrates a situation, where the drawbar has reached its full length and on one side of the drawbar the bearing surface 154 has reached its limit position on the sensing surface 158, when the train in normal operation drives forwardly. and the train in normal operation drives forwardly. At reverse manoeuvres in a terminal the fully extended drawbar can be further angled with respect to the traction vehicle under biased contact with the arm 152 due to the arcuate shape of the later, as is shown in Figure 14.

In Figures 15 and 16 still a further embodiment is shown only schematically, the outer tube having the designation 18 and the inner tube the designation as earlier. The trailer coupling 6 is here indicted by means of a vertical pivot marking and a portion of the frame of the truck is shown at 170.

An angle sensor generally denoted 172 is carried by the frame 170. The angle sensor is controlled by the angle between the drawbar and the traction vehicle via a link rod 174 which at its one is pivotally connected to the inner tube at 176 and at its other end with the angle sensor 172 at 178 in a way to be described more closely below. Between the tubes 18 and 20 the tube 18 in the embodiment shown carries a length sensor 180 which is controlled by the extending length of the inner tube 20.

The angle and length sensors 172 and 180, respectively, in one embodiment can comprise each essentially four two-state devices which independent of each other can take the values zero or one. In each sensor these two state devices can comprise photocells or Hall-effect elements cooperating with a common perforated disc and being built into the respective sensors in a suitable way, known per se. The whole is so arranged that the arrangements of two-state devices cooperating with a perforated disc in the respective sensors exactly correspond to each other, the angle sensor 172 then operating as a means for providing a nominal value of the length of the drawbar and the length sensor 180 operating as a means for providing an actual value thereof.

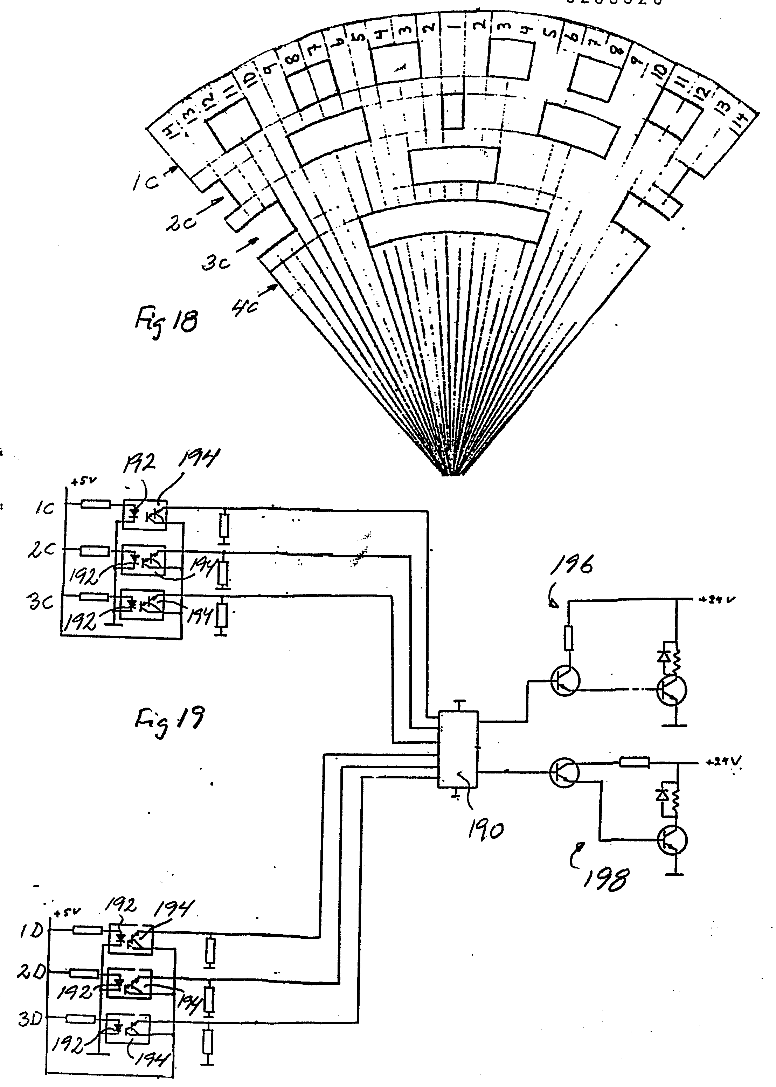

In Figure 17 the two-state devices of the nominal value providing means are indicated 1C-4C and the two-state devices of the actual value providing means are designated 1D-4D. The outputs of the respective two-state devices are connected to an operative comparison circuit 190, the output signals of which are used to control a solenoid controlled direction valve in substantially the same way as has been described above with reference to the embodiment according to Figures 7a-c.

The perforated disc included in the angle sensor 172 can be designed as shown in Figure 18 and be pivotally supported at its tip about an axis indicated at 182 in Figure 15 and linked to the link rod 174 at 178 to be controlled by means of this. The limit of rotation is $\pm 75°$ as indicated at the arcuate arrow in Figure 15. The arcuate hole lines in the disc according to Figure 18 are sensed by each one of said two-state devices and have, for the sake of clearness, also received the designations 1C-4C.

The perforated disc included in the length sensor 180 is indicated at 184 in Figure 15 and comprises a disc shiftable in a guide channel 186 parallel to the tubes 18 and 20, said disc having for rectilinear lines of holes corresponding to the arcuate lines of holes in Figure 18 and each sensed by a respective one of said two-state devices 1D-4D. At its one end the disc 184 at 188 is connected to the tube 20. Alternatively the guide channel 186 can, however, be attached, in a way not shown, to the hydraulic cylinder, not shown in Figures 15 and 16, and the disc 184 can be connected to the piston rod.

Figure 19 illustrated in some more detail the design of the circuit, only three of the two-state devices of the two sensors being shown. 192 designates here a light emitting diode included in each two-state devide and 194 a phototransistor device cooperating therewith and including an amplifier. Between the elements 192 and 194 the corresponding perforated disc is movable. To the circuit 190 two amplifier circuits 196 and 198, respectively, are connected, the output of which are connected for driving each a solenoid of the direction valve, cf. the embodiment according to Figure 7. Which one of the outputs that has an output signal depends upon the relationship between the signals obtained from the sensors. The angle sensor with light emitting diode, perforated disc and phototransistor are well known to the man of the art as well as is the correspondingly designed length sensor, and need therefore not be described more closely here. The apertured discs are made of plastic or any other suitable material with the holes being openings or transparent windows. Alternatively, magnets can be used instead of light emitting diodes, which cooperate with Hall-effect elements, replacing the phototransistors, the corresponding apertured disc being then, of course, made of metal. The apertured discs are suitably, in a way known per se, coded in binary or Grey-code.

The embodiment described operates as follows. At the angle zero between drawbar and truck the signals of the nominal value and actual value providing means agree at the circuit 190 and via the circuit 190 the direction valve of the hydraulic circuit is controlled to its neutral position (cf. Figure 7b). At angle increase towards either side of the drawbar with respect to the truck the apertured disc included in the angle sensor 172 is turned to a corresponding degree, resulting in a correspondingly coded output signal from the two-state devices 1C-4C to the circuit 190. Since actual value and nominal value do no longer agree at the circuit 190, that solenoid of the direction valve receives current, which controls the hydraulic circuit to extend the inner tube 20 (cf. Figure 7c). This shift is sensed by the length sensor 180. When its coded output signal length sensor 180. When its coded output signal from the two-state devices 1D-4D agrees to that of the nominal value providing sensor, the direction valve is set to its neutral position again via the circuit 190. At decrease of the angle between drawbar and truck a case corresponding to Figure 7a is obtained in a corresponding way, which leads to shortening of the drawbar. The above described process is repeated for each angle change towards one or the other side so that the length of the drawbar is always set to such a value that the measured actual and nominal values from the length sensor and angle sensor, respectively, agree.

How to accomplish the circuit device according to Figure 19 in practice is understood by the man of the art. The circuit 190 can e.g. be of the type SN74LS85.

In practice it may be suitable do dimension the device according to the invention to be controlled by the normal hydraulic system of the truck. In pressure lines to the hydraulic cylinder a pressure accumulator can then advantageously be arranged, which by means of a valve arrangement is loaded only in the rest state of the system, whereby supply of enough hydraulic fluid flow is always secured.

According to an embodiment advantageous in practice the drawbar with attachment and at least portions of the control equipment for the control of the hydraulic cylinder device can be designed as a mounting unit.

To the above it can be added that even at level differences between the shafts of the vehicle train the control equipment described above with reference to Figures 7-11 can partly eliminate the risk for contact between trucks and trailer due to the lengthening of the drawbar. At shunting manoeuvres or e.g. at up and down movements on ship ramps, load ramps or the like so great level differences can, however, appear that it may be suitable to have a possibility to extend the drawbar to its full length from the cabin.

As has been described the invention can be used in a vehicle train including a dolly, as well as at the drawbar of a conventional trailer or the like.

## Claims

1. An arrangement at a length variable drawbar (10) with a drawbar eye (32) for pivotable connection of a trailer (4) to a truck (2), **characterized** in that the drawbar includes at least two mutually telescopically and sealingly slidably supported tubes (18,20), of which a first one (18) at its one end has connection to an attachment (38) located on the trailer side, and a second one (30) at the opposite end carries the drawbar eye (32), that a double-acting hydraulic cylinder device (34,36) is arranged within the tubes and pivotally connected to and acting between said ends.

2. An arrangement according to claim 1, **characterized** in that said one end of the first tube (18) is located behind the attachment (28).

3. An arrangement according to claims 1 or 2, **characterized** in that an angle sensing device (44) is provided in association with the fore end of the drawbar (10) for sensing the angle between drawbar (2) and truck and, in response to the sensed angle, controlling the hydraulic fluid flow to the hydraulic cylinder (34) in order to change the length of the drawbar.

4. An arrangement according to claim 3, **characterized** in that the angle sensing device (44) is attached on the first tube (18) for sensing the tendency appearing at change of angle between the drawbar (10) and truck (2) to change of distance between the fore end of the first tube and a sensed surface (88;97) on the rear of the truck. (2).

5. An arrangement according to claim 4, **characterized** in that the angle sensing device (44) is arranged on one hand, when said distance exceeds a predetermined maximum distance, to affect the supply of hydraulic fluid to the hydraulic cylinder so that the piston rod (36) is shifted into the cylinder (34) for drawing together the drawbar until the predetermined maximum distance has been reached on the other hand, when the distance goes below a predetermined minimum distance, to control the supply of hydraulic fluid to the hydraulic cylinder so that the piston rod is shifted out of the cylinder for lengthening of the drawbar until the predetermined minimum distance has been reached, and thirdly, when the distance lies within the predetermined minimum and maximum distances, to control the hydraulic fluid supply so that the actual position of the piston (76) in the cylinder (34) is maintained.

6. An arrangement according to claim 5, **characterized** in that the angle sensing device includes two inductive sensors (50,52) with different ranges of reach located close to each other and directed towards a plate (88) on the truck, the sensor (52) with the longer range of reach (56) being coupled for controlling, when the plate is located beyond its range of reach, the supply of hydraulic fluid to the hydraulic cylinder (34) so that the piston rod (36) is shifted into the cylinder for shortening of the drawbar until the plate comes within the range of reach (56) of the sensor, the sensor (50) with the shorter range of reach (54) being coupled for controlling, when the plate (88) comes within its range of reach, the supply of hydraulic fluid to the hydraulic cylinder (34) so that the piston rod (36) is shifted out of the cylinder for lengthening the drawbar until the plate (88) comes beyond the range of reach of the sensor, and both inducitve sensors are coupled such that, when the plate only lies within the range of reach of the sensor (52) with the longer range of reach, the position of the piston in the cylinder is not affected.

7. An arrangement according to claim 6, **characterized** in that the inductive sensors (50,52) are coupled for controlling a solenoid controlled set element (78) of a direction valve (74) for the hydraulic fluid flow to the hydraulic device.

8. An arrangement according to clam 5, **characterized** in that the angle sensing device includes at least one stick (92,106) intended for cooperation with the sensed surface by means of an upper portion, said stick being pivotally supported on the first tube (18) for turning essentially in the direction of the drawbar (10) and spring biased (102) forwardly with its portion located above the pivot (92), said stick being coupled for controlling, by means of its movements, the hydraulic fluid supply to the hydraulic cylinder.

9. An arrangement according to claim 8, **characterized** in that the stick is directly mechanically coupled for moving a set element (78) of a direction valve, or alternatively a pilot valve for a direction valve, likewise located on the first tube (18), for controlling the hydraulic fluid flow to the hydraulic cylinder device.

10. An arrangement according to claim 8, **characterized** in that the stick is coupled to control arms (134,136) for controlling contacts (130,132) in the input lines to solenoids of a solenoid controlled set element of a direction valve for controlling the hydraulic fluid flow to the hydraulic cylinder.

11. An arrangement according to claim 8 or 9, **characterized** in that the upper portion (96) of the stick is arranged to cooperate with the sensed surface (97) by sliding contact with the same.

12. An arrangement according to claim 8 or 9, **characterized** in that the stick (106) at its upper end slidably carries two rods (112,114), which are directed under an angle towards each other against the sensed surface (97) and pivotally connected to the sensed surface on each its side of the longitudinal mid plane of the truck, each rod carrying a stop (120,122) for its sliding movement with respect to the stick, said stop position determining the predetermined minimum distance.

13. An arrangement according to claim 3, **characterized** in that the angle sensing device includes two sensing arms (152) carried by the first tube (18) protruding sidewardly - forwardly from the tube for cooperation with each a bearing surface (154) on the rear of the truck on both sides of the coupling device of the truck, said arms (152) being spring biased in a direction forwardly with respect to the first tube (18), such that when said angle goes below a certain value both arms (152), while taking a neutral position with respect to the first tube, with their fore ends (158), abut the respectvie bearing surfaces (154), but when the angle increases toward one side, the arm (152) located on that side by its increasing abutment pressure against the corresponding bearing surface is submitted to a movement backwardly on the first tube against the spring bias, and when the angle decreases, the arm (152) by the spring bias is shifted forwardly on the first tube (18), a sensing and hydraulic circuit control device (160,164) being arranged to sense these changes of the mutual positions of the arm (152) and the first tube (18) and control the supply of hydraulic fluid to the hydraulic cylinder so that the piston rod is moved in the cylinder for lengthening and shortening, respectively, the drawbar for resetting the neutral position of the arm with respect to the first tube.

14. An arrangement according to claim 13, **characterized** in that the sensing and hydraulic circuit control device (160-164) includes a cam surface (164) connected with the arms for movement along the first tube, and a direction valve for controlling the direction of the hydraulic fluid supply to the hydraulic cylinder, the slide of said direction valve carrying a cam follower (162) being in contact with the cam surface and having a neutral position on the cam surface corresponding to said neutral position.

15. An arrangement according to claim 3, **characterized** in that means (172) controlled by the angle between the drawbar and the traction car for providing nominal values for the length of the drawbar, and means (180) controlled by the length of the drawbar for providing the actual value of said length, are connected to a comparison circuit (190), the output signals of which are used for controlling the hydraulic fluid supply to the hydraulic cylinder so that the length of the drawbar is set such that said actual and nominal values are set alike.

16. An arrangement according to claim 15, **characterized** in that said nominal value and actual value providing means (172,180) each essentially comprise a number of two-state devices in the form of e.g. Hall-effect elements or photocells, which independently of each other can take the values zero or one and are controlled by an aperture disc associated with each said means and being aperture coded in e.g. binary or Greycode.

17. An arrangement according to claim 16, **characterized** in that the apertured disc of the nominal value providing means (172) is rotatably mounted on the truck and connected to the drawbar (18,20) by means of a link rod (174).

18. An arrangement according to claims 16 or 17, **characterized** in that the apertured disc (184) of the actual value providing means (180) is rectilinear and extends along the drawbar.

19. An arrangement according to any of claims 3 - 18, **characterized** in that a direction valve, alternatively a pilot valve therefor, for controlling the direction of hydraulic fluid flow to the hydraulic cylinder is carried by the first tube.

20. An arrangement according to any of the preceding claims, **characterized** in that the drawbar with attachment, and at least portion of the control equipment for controlling the movements of the hydraulic cylinder device are designed as a unit.

21. An arrangement according to any of the preceding claims, **characterized** in that the hydraulic cylinder device is dimensioned to be included in the normal hydaulic system of the truck.

Fig. 1

Fig. 2

Fig. 3

Fig. 4

Fig. 5

Fig. 6

Fig. 8

Fig. 7

Fig. 9

Fig. 10

Fig. 11

Fig 12

Fig 13

Fig 14

Fig 15

Fig 16

Fig 17

| | | | |
|---|---|---|---|
| | V>L | Lång | |
| | V=L | Neutral | |
| | V<L | Kort | |

0266328

Fig 18

Fig 19

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 176 442 (R. JEANSON) <br> * Whole document * <br> --- | 1,3,5, 20,21 | B 60 D    1/00 |
| A | CH-A- 659 976 (F.X. KÖGEL) <br> * Whole document * <br> --- | 1,3,5 | |
| A | EP-A-0 223 640 (R. JEANSON) <br> * Abstract; figures * <br> --- | 1,5,8,9 ,11 | |
| A | US-A-3 244 434 (GENERAL STEEL INDUSTRIES) <br> * Column 1, lines 1-16; figures 1-4 * <br> --- | 1,10 | |
| A | DE-A-3 330 387 (IKARUS KAROSSZERIA- ES JARMÜGYAR) <br> * Abstract; figures 1-3 * <br> --- | 3,15-17 | |
| A | DE-A-3 315 650 (BERGISCHE STAHL-INDUSTRIE) <br> * Abstract; figure * <br> ----- | 1 | |
| | | | TECHNICAL FIELDS SEARCHED (Int. Cl.4) <br><br> B 60 D <br> B 62 D |

The present search report has been drawn up for all claims

| Place of search | Date of completion of the search | Examiner |
|---|---|---|
| THE HAGUE | 01-02-1988 | LINTZ C.H. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

    .....................................................
& : member of the same patent family, corresponding
   document

EPO FORM 1503 03.82 (P0401)